# EUROPÄISCHE PATENTANMELDUNG

(11) **EP 2 415 339 A1**
(43) Veröffentlichungstag der Anmeldung: **08.02.2012**
(21) Anmeldenummer: 11401562.1
(22) Anmeldetag: 01.08.2011
(51) Int. Cl.: A01C 17/00

(54) **Schleuderstreuer**

(30) Priorität: 06.08.2010 DE 102010036882
(71) Anmelder: Amazonen-Werke H. Dreyer GmbH & Co. KG, 49205 Hasbergen (DE)
(72) Erfinder: Johannaber, Stefan Jan, 49536 Lienen (DE); Scheufler, Bernd, Dr., 49205 Hasbergen (DE)

(57) **Zusammenfassung**

Verfahren zum Einstellen zumindest eines als mittels eines Schiebers (11) einstellbaren Auslauföffnung (10) ausgebildeten Dosierorganes (5) einer Verteilmaschine anhand der bei einer Abdrehprobe gefundenen Werte, wobei die Abdrehprobe an einem separaten Dosierorgan (9) durchgeführt wird und die hierbei gefunden Werte auf die Einstellung der Dosierorgane (9) der Verteilmaschine übertragen werden. Um in einfacher Weise das bekannte Abdrehverfahren auch für ein großes Ausbringmengenspektrum genauer zu machen, ist vorgesehen, dass die Abdrehprobe mit einer Einstellung an dem separaten Dosierorgan (9) durchgeführt wird, wobei der über den Schieber (11) eingestellte freie Auslaufquerschnitt (10,10',10'',21,21',21'') der Auslauföffnung (10,21) und der hieraus ausstroemenden Materialmenge im Bereich der vorgesehenen auszubringenden Materialmenge liegt.

## Beschreibung

Die Erfindung betrifft ein Verfahren zum Einstellen zumindest eines Dosierorganes gemäß des Oberbegriffes des Patentanspruches 1.

Ein derartiges Verfahren ist in der EP 0 495 237 B1 beschrieben. Bei diesem Verfahren ist an der für das Abdrehen vorgesehenen Auslassöffnung nur eine Einstellung vorgesehen. Im Zusammenhang mit der Erstellung und Verwendung des Nomogramms wird darauf hingewiesen, dass bei einstellbaren separaten Dosieröffnungen die verwendete Einstellung festgehalten und angegeben werden muss. Was hierunter verstanden werden soll, ist jedoch in dieser Druckschrift nicht erläutert.

Dieses Verfahren hat sich in der Praxis insbesondere bei Schleuderdüngerstreuern, deren Dosierorgane eine relativ geringe Menge Material pro Zeiteinheit dosieren, bewährt. Wenn dieses Verfahren bei Schleuderdüngerstreuern angewendet wird, die ein großes Ausbringmengenspektrum haben, kann es vorkommen, dass der Einstellwert, der bei der Abdrehprobe ermittelt wird, nicht ausreichend genau ist, wenn die auszubringende Menge sehr stark vom Abdrehmengenwert abweicht.

Der Erfindung liegt die Aufgabe zu Grunde, in einfacher Weise das bekannte Abdrehverfahren auch für ein großes Ausbringmengenspektrum genauer zu machen.

Diese Aufgabe wird erfindungsgemäß dadurch gelöst, dass die Abdrehprobe mit einer Einstellung an dem separaten Dosierorgan durchgeführt wird, wobei der über den Schieber eingestellte freie Auslaufquerschnitt der Auslauföffnung und der hieraus ausstroemenden Materialmenge im Bereich der vorgesehenen auszubringenden Materialmenge liegt.

Infolge dieser Maßnahmen ist es möglich, dass die Abdrehprobe so durchgeführt wird, das die Ausfließmenge bei der Abdrehprobe in dem Bereich der vorgesehenen Ausbringmenge an dem eigentlichen Dosierorgan liegt. Somit können mehrere verschiedene Abdrehproben durchgeführt werden, so dass sich der Ausfließkurve sehr exakt angenähert wird.

Hierbei ist vorteilhaft, dass mehrere Abdrehprobe durchgeführt werden, um sich der Ausfließkurve und der tatsächlichen Ausfließmenge anzunähern.

Vorteilhaft ist hierbei, wenn in Verbindung mit einem Bordcomputer die Abdrehprobe durchgeführt wird, dass sich in dem Speicher des Bordcomputers ein Algorithmus zur Ermittlung des Kalibrierwertes befindet. Wenn der Einstellvorrichtung der separaten Öffnung eine motorische Stelleinrichtung zugeordnet ist, die mit dem Bordcomputer verbunden ist, kann der Bordcomputer über die Einstellvorrichtung die separate Eröffnung entsprechend für die Durchführung der Abdrehprobe einstellen.

Bei einer Verteilmaschine zur Durchführung des Verfahrens ist vorgesehen, dass über den Schieber der freigegebene Querschnitt der Auslassöffnung in mehrere definierte Auslaufquerschnitte einstellbar ist.

Infolge dieser Maßnahmen lässt sich in einfacher Weise sicherstellen, dass die Ausfließmenge bei der Abdrehprobe in dem Bereich der vorgesehenen Ausbringmenge liegt. Somit lassen sich sehr genaue Einstellungen für das Dosierorgan der Verteilmaschine finden.

Dem separaten Dosierorgan kann eine Wiegevorrichtung in integrierter Weise zugeordnet sein, mittels welcher das in dem Auffangbehälter bei der Abdrehprobe aufgefangene Gewicht ermittelbar ist.

Weiterhin kann eine Einstellvorrichtung vorhanden sein, mittels welcher sich die an dem separaten Dosierorgan einzustellende Größe der Auslassöffnung des separaten Dosierorganes entsprechend der vorgesehenen Ausbringmenge an den Dosierorganen des Schleuderduengerstreuers einstellen lässt.

Weiterhin kann die Einstellung des separaten Dosierorganes über einen Bordcomputer erfolgen. Hierbei ist in dem Bordcomputer ein Algorithmus zur Ermittlung des Qualitätswertes hinterlegt. Somit kann also automatisch die entsprechende Position des Schiebers zur Einstellung der Auslassöffnung des separaten Dosierorganes gefunden werden.

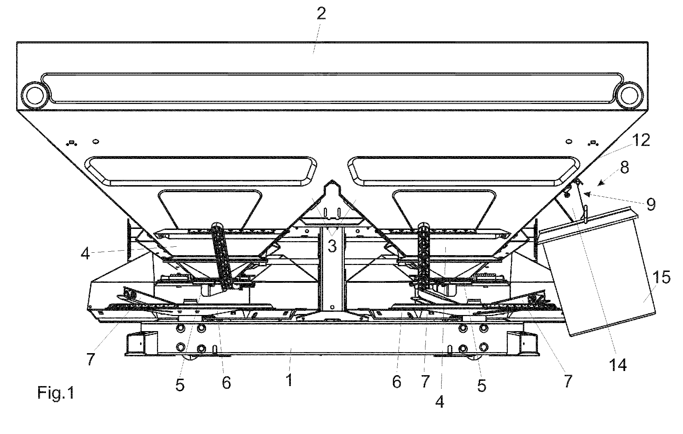

Weitere Einzelheiten der Erfindung sind der Beispielsbeschreibung und den Zeichnungen zu entnehmen. Hierbei zeigen
- Fig. 1: eine als Schleuderdüngerstreuer ausgebildete Verteilmaschine in Seitenansicht mit dem separaten Dosierorgan,
- Fig. 2: die Anordnung des separaten Dosierorgans an dem Vorratsbehälter des Schleuderdüngerstreuers in der Ansicht 11-11 und im vergrößertem Maßstab, wobei die Auslassöffnung des separaten Dosierorganes zur Durchführung der Abdrehprobe zur Durchführung der Abdrehprobe vollständig freigegeben ist,
- Fig. 3: das separate Dosierorgan in der Darstellungsweise gemäß Fig. 2, wobei zwei Drittel der Fläche der Auslassöffnung des separaten Dosierorganes freigegeben ist,
- Fig. 4: das separate Dosierorgan in der Darstellungsweise gemäß Fig. 2, wobei ein Drittel der Fläche der Auslassöffnung des separaten Dosierorganes freigegeben ist,
- Fig. 5: die Anordnung eines anders ausgestalteten separaten Dosierorgans an dem Vorratsbehälter des Schleuderdüngerstreuers in der Ansicht II-II und im vergrößertem Maßstab, wobei die Auslassöffnung des separaten Dosierorganes zur Durchführung der Abdrehprobe zur Durchführung der Abdrehprobe vollständig freigegeben ist,
- Fig. 6: das separate Dosierorgan in der Darstellungsweise gemäß Fig. 5, wobei zwei Drittel der Fläche der Auslassöffnung des separaten Dosierorganes freigegeben ist und
- Fig. 7: das separate Dosierorgan in der Darstellungsweise gemäß Fig. 5, wobei ein Drittel der Fläche der Auslassöffnung des separaten Dosierorganes freigegeben ist.

Die als Schleuderdüngerstreuer ausgebildete Verteilmaschine weist den Rahmen 1 und den Vorratsbehälter 2 auf. Der Vorratsbehälter 2 ist in seinem unteren Bereich durch das dachförmige Mittelteil 3 in die beiden Auslauftrichter 4 unterteilt. In dem Boden des jeweiligen Auslauftrichters sind die Auslauföffnungen der Dosierorgane 5 in bekannter Weise angeordnet. Diese Auslassöffnungen werden, ebenfalls in bekannter Weise über Schieber in ihrer Öffnungsweite eingestellt, um die gewünschte Ausbringmenge den unterhalb der Dosierorgane 5 angeordneten motorisch angetriebenen Schleuderscheiben 6, auf denen Wurfschaufeln 7 angeordnet sind, jeweils zuzuführen. Die Größe der freigegebene Fläche der Auslassöffnung der Dosierorgane 5 bestimmt die der jeweiligen Schleuderscheibe 6 zugeleiteten Ausbringmenge. Die den Schleuderscheiben 6 von den Dosierorganen 5 zudosierten Düngemittel werden von den auf den Schleuderscheiben 6 angeordneten Wurfschaufeln 7 in Bereitverteilung auf der Bodenoberfläche verteilt.

Für das Durchführen einer Abdrehprobe ist der Schleuderdüngerstreuer mit einer speziellen Abdrehvorrichtung 8 ausgestattet. Diese Abdrehvorrichtung 8 befindet sich seitlich am Vorratsbehälter 2. Diese Abdrehvorrichtung 8 ist ein separates Dosierorgan 9. Dieses separate Dosierorgan 9 dient ausschließlich der Durchführung der Abdrehprobe. Dieses separatee Dosierorgan 9 weist die Auslassöffnung 10 und den Schieber 11 auf. Hierzu befindet sich in der Seitenwand 12 des Vorratsbehaelters 2 die Auslassöffnung 10. Vor der Auslassöffnung 10 ist die Halterung 13 angeordnet. An der Halterung 13 ist eine U-förmige Rutsche 14 angeordnet, an welcher der Auffangbehälter 15 eingehängt werden kann. Weiterhin ist im Bereich der Auslassöffnung 10 mittels eines Bolzens 16 der Schieber 11 drehbar gelagert. Zwischen der Halterung 13 unter dem Schieber 11 ist eine Zugfeder 17 angeordnet, welche den Schieber 11 in Schließstellung zieht. In der Schließstellung verschließt der Schieber 11 die Auslassöffnung 10 des separaten Dosierorganes 9. An der Oberseite Schiebers 11 ist ein Zugseil 18 befestigt, mittels welchem zur Durchführung der Abdrehprobe der Schieber 11 betätigt wird, so dass die Auslassöffnung 10 während der Abdrehprobe, wie nachfolgend beschrieben, entsprechend freigegeben werden kann.

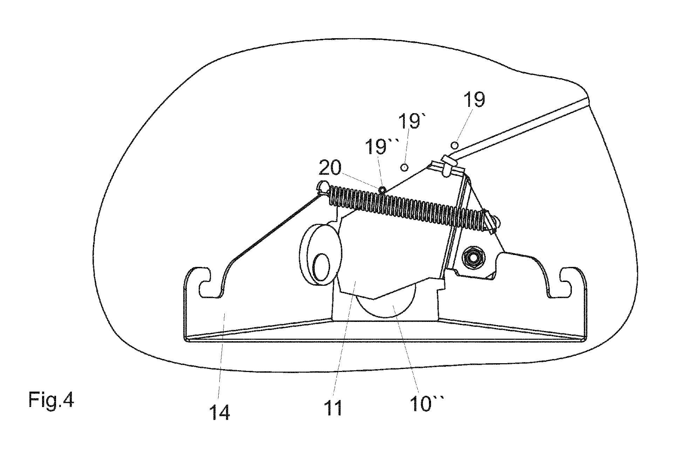

Im Bereich des Schiebers 11 sind an der Seitenwand 12 des Vorratsbehaelters 2 drei Einsteckpositionen 19, 19', 19" für einen Anschlagbolzen 20 vorgesehen, wie insbesondere Fig. 4 zeigt, in welcher jeweils entsprechend der gewünschten freigegebenen Größe 10', 10" der Auslassöffnung 10 durch den Schieber 11 der Anschlagbolzen 20 eingesteckt werden kann.

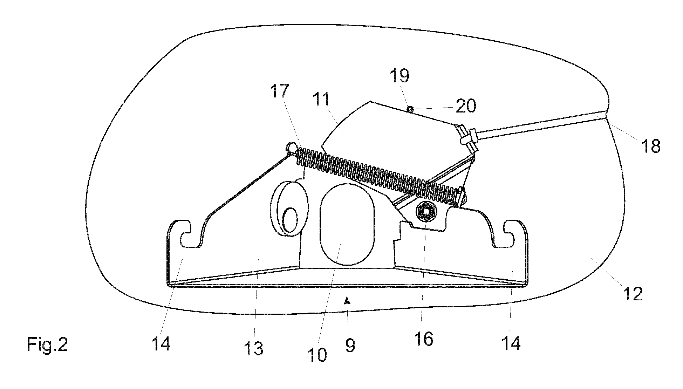

Wenn in der Bolzen 20 in der Einsteckposition 19 gemäß Fig.2, also ganz oben-außen eingesteckt wird, kann der Schieber 11 größtmöglichst verschwenkt werden, so dass der gesamte Querschnitt der Auslassöffnung 10 freigegeben wird.

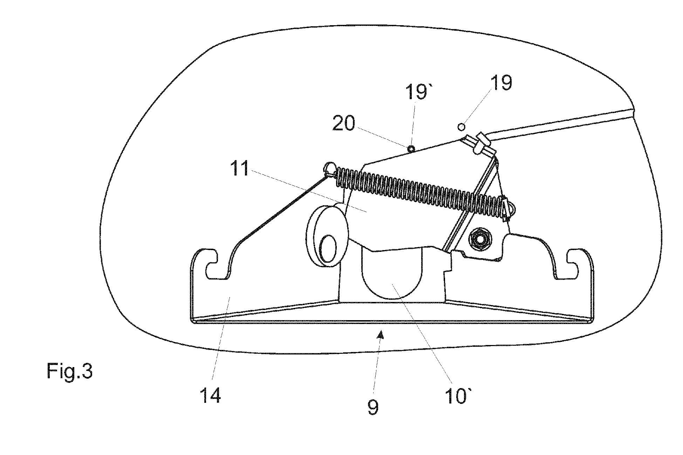

Wenn in der Bolzen 20 in der Einsteckposition 19' gemäß Fig.3, also in der mittleren Einsteckposition eingesteckt wird, kann der Schieber 11 soweit verschwenkt werden, so dass zwei Drittel des Querschnittes 10' der Auslassöffnung 10 freigegeben wird.

Wenn in der Bolzen 20 in der Einsteckposition 19" gemäß Fig.4, also in der untersten Einsteckposition eingesteckt wird, kann der Schieber 11 soweit verschwenkt werden, so dass nur ein Drittel des Querschnittes 10" der Auslassöffnung 10 freigegeben wird.

Die grundsätzliche Durchführung der Abdrehprobe und die Einstellung der Dosierorgane 5 geschieht entsprechend den Ausführungen in der EP 0 495 237 B1. Sie unterscheidet sich jedoch dahingehend, dass gemäß der bekannten Durchführung der Abdrehprobe und der Einstellung der Dosierorgane 5 nach der vorgenannten EP 0 495 237 B1 immer der gesamte Querschnitt der Auslassöffnung 10 des separaten Dosierorganes 9 freigegeben wird, egal welche Ausbringmenge tatsächlich an den Dosierorganen 5 des Schleuderstreuers durch die entsprechende Einstellung der Auslassöffnung über den Dosierschieber eingestellt wird.

Nach der Erfindung wird jetzt bei der Durchführung der Abdrehprobe mit einer Einstellung an dem separaten Dosierorgan 9 gearbeitet, wobei der über den Schieber 11 eingestellte freie Auslaufquerschnitt 10', 10" der Auslassöffnung 10 des separaten Dosierorganes 9 und die hieraus ausstroemenden Materialmenge im Bereich der vorgesehenen auszubringenden Materialmenge liegt. Hierbei können mehrere Abdrehproben durchgeführt werden, um sich der Ausfließkurve und der tatsächlichen Ausfließmenge anzunähern.

Hierbei ist über den Schieber 11 der freigegebene Querschnitt 10', 10" der Auslassöffnung 10 des separaten Dosierorganes 9 in mehrere definierte Auslaufquerschnitt einstellbar, wie zu den Fig. 2-4 vorstehend erläutert ist.

Die Einstellung für den freizugebenden Querschnitt der Auslassöffnung 10 des separaten Dosierorganes 9 gemäß Fig. 2 wird man dann wählen, wenn für die Einstellung der Ausbringmenge an dem eigentlichen Dosierorgan 5 des Schleuderstreuers die Einstellung im Bereich der größtmöglichen Ausbringmenge liegt.

Die Einstellung für den freizugebenden Querschnitt 10' der Auslassöffnung 10 des separaten Dosierorganes 9 gemäß Fig. 3 wird man dann wählen, wenn für die Einstellung der Ausbringmenge an dem eigentlichen Dosierorgan 5 des Schleuderstreuers die Einstellung im Bereich von etwa zwei Drittel der größtmöglichen Ausbringmenge liegt.

Die Einstellung für den freizugebenden Querschnitt 10' der Auslassöffnung 10 des separaten Dosierorganes 9 gemäß Fig. 4 wird man dann wählen, wenn für die Einstellung der Ausbringmenge an dem eigentlichen Dosierorgan 5 des Schleuderstreuers die Einstellung im Bereich von etwa ein Drittel der größtmöglichen Ausbringmenge liegt.

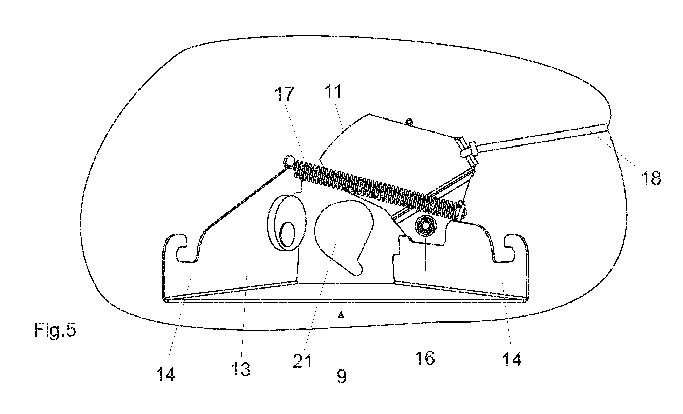

Das separate Dosierorgan 9 gemäß den Fig. 5-7 unterscheidet sich von den separaten Dosierorgan 9 gemäß den Fig. 2-4 durch eine anders ausgestaltete Form der Auslassöffnung 21. In diesem Falle entspricht die Form der Auslassöffnung 21 des separaten Dosierorganes 9 exakt der Form der Auslassöffnung des eigentlichen Dosierorganes 5 am unteren Ende des Auslauftrichters 4 des Düngerstreuers.

Die Durchführung der Abdrehprobe an dem separaten Dosierorgan 9 gemäß den Fig. 5-7 entspricht der Durchführung der Abdrehprobe gemäß des separaten Dosierorganes 9 gemäß den Fig. 2-4.

### Hierzu im einzelnen:

Wenn in der Bolzen in der Einsteckposition gemäß Fig.5, also ganz oben-außen eingesteckt wird, kann der Schieber 11 größtmöglichst verschwenkt werden, so dass der gesamte Querschnitt der Auslassöffnung 21 freigegeben wird.

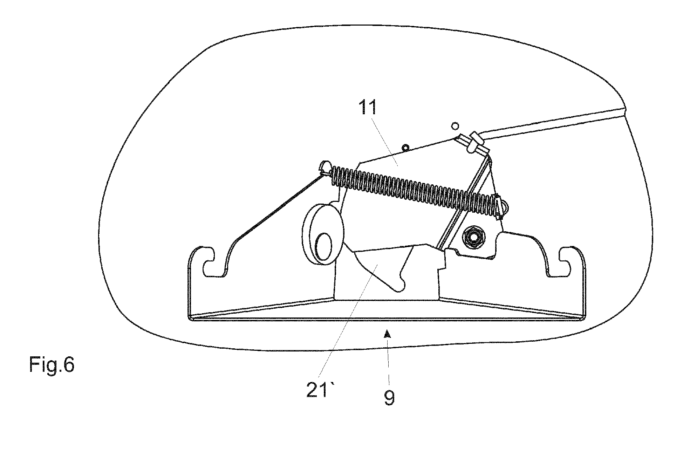

Wenn in der Bolzen in der Einsteckposition gemäß Fig.6, also in der mittleren Einsteckposition eingesteckt wird, kann der Schieber 11 soweit verschwenkt werden, so dass zwei Drittel des Querschnittes 21' der Auslassöffnung 21 freigegeben wird.

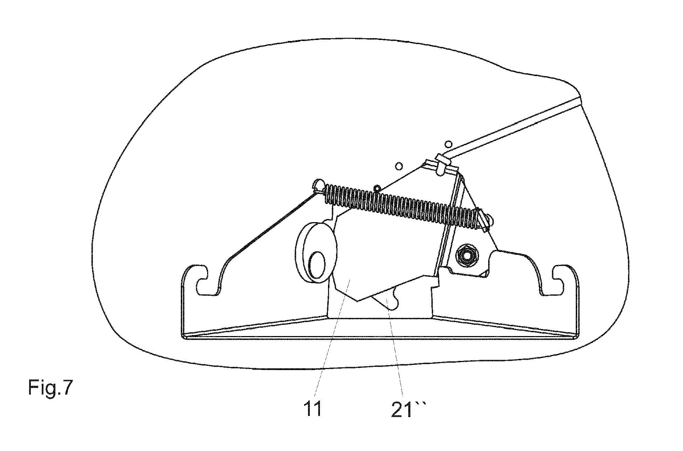

Wenn in der Bolzen in der Einsteckposition gemäß Fig.7, also in der untersten Einsteckposition eingesteckt wird, kann der Schieber 11 soweit verschwenkt werden, so dass nur ein Drittel des Querschnittes 21" der Auslassöffnung 21 freigegeben wird.

Im übrigen wird sonst auf die Ausführungen zu der Durchführung der Abdrehprobe gemäß dem separaten Dosierorgan 9 nach den Fig. 2-4 verwiesen.

## Patentansprüche

1. Verfahren zum Einstellen zumindest eines als mittels eines Schiebers einstellbaren Auslauföffnung ausgebildeten Dosierorganes einer Verteilmaschine anhand der bei einer Abdrehprobe gefundenen Werte, wobei die Abdrehprobe an einem separaten Dosierorgan durchgeführt wird und die hierbei gefunden Werte auf die Einstellung der Dosierorgane der Verteilmaschine übertragen werden, **dadurch gekennzeichnet, dass** die Abdrehprobe mit einer Einstellung an dem separaten Dosierorgan (9) durchgeführt wird, wobei der über den Schieber (11) eingestellte freie Auslaufquerschnitt (10, 10', 10", 21, 21' 21") der Auslauföffnung (10, 21) und der hieraus ausstroemenden Materialmenge im Bereich der vorgesehenen auszubringenden Materialmenge liegt.

2. Verfahren nach Anspruch eins, **dadurch gekennzeichnet, dass** mehrere Abdrehprobe durchgeführt werden, um sich der Ausfließkurve und der tatsächlichen Ausfließmenge anzunähern.

3. Verteilmaschine zur Durchführung des Verfahrens nach zumindest einem der vorstehenden Ansprüche, wobei die Verteilensmaschine einen Vorratsbehälter mit einem als Schieber einstellbaren Auslauföffnung ausgebildeten Dosierorgan aufweist, über welche das auszubringenden Material unterhalb den Dosierorganen angeordneten Schleuderscheiben zugeführt wird, wobei zusätzlich zu den den Verteilensorganen zugeordneten Dosierorgane ein separates Dosierorgan zum Durchführen der Abdrehprobe vorgesehen ist, wobei dieses Dosierorgan als mit einem Schieber zu öffnende und zu verschließende Auslauföffnung ausgebildet ist, **dadurch gekennzeichnet, dass** über den Schieber (11) der freigegebene Querschnitt (10, 10', 10", 21, 21' 21") der Auslassöffnung (10, 21) in mehrere definierte Auslaufquerschnitte (10, 10', 10", 21, 21' 21") einstellbar ist.
